# FASCICULE DE BREVET EUROPEEN

(11) **EP 0 577 453 B1**
(45) Date de publication et mention de la délivrance du brevet: **11.10.1995**
(21) Numéro de dépôt: 93401522.3
(22) Date de dépôt: 14.06.1993
(51) Int. Cl.: G21C 17/108

(54) **Procédé d'utilisation d'un doigt de gant d'un réacteur nucléaire à eau sous pression et dispositif de réglage de la position axiale du doigt de gant**
Verfahren zum Einsatz eines Instrumentierungsrohres eines Druckreaktorkernreaktors und Vorrichtung zum Verändern der axialen Lagen des Rohres
Method to operate a thimble tube of a nuclear pressure water reactor and device for varying the axial position of the thimble tube

(30) Priorité: 03.07.1992 FR 9208263
(43) Date de publication de la demande: 05.01.1994
(73) Titulaire: FRAMATOME, 92400 Courbevoie (FR)
(72) Inventeur: Malmasson, Jacques, F-91000 Evry (FR)
(74) Mandataire: Bouget, Lucien

(56) Documents cités:
- FR-A- 2 081 077
- FR-A- 2 593 959
- GB-A- 2 208 961
- US-A- 4 933 137

## Description

L'invention est relative à un procédé d'utilisation d'un conduit de mesure fermé à l'une de ses extrémités ou doigt de gant d'un réacteur nucléaire refroidi par de l'eau sous pression, de manière à allonger la durée de vie en service du doigt de gant et à un dispositif de réglage de la position du doigt de gant dans un conduit de guidage d'instrumentation.

Les réacteurs nucléaires à eau sous pression comportent un coeur formé d'assemblages de forme prismatique disposés verticalement et reposant sur une plaque de support, à l'intérieur de la cuve du réacteur nucléaire.

Pendant le fonctionnement du réacteur nucléaire, il est nécessaire de réaliser périodiquement des mesures de flux à l'intérieur même du coeur. On utilise pour celà des détecteurs à fission de très petites dimensions qui sont déplacés par commande à distance à l'aide de câbles téléflex à l'intérieur de tubes fermés à l'une de leurs extrémités, appelés doigts de gant. Les doigts de gant sont introduits suivant une répartition prédéterminée dans certains assemblages du coeur, après passage à l'intérieur d'un conduit de guidage d'instrumentation. Le conduit de guidage d'instrumentation comporte un tube de guidage reliant un local de mesure au fond de la cuve du réacteur, au niveau d'une manchette de traversée du fond et un canal vertical traversant les équipements internes inférieurs du réacteur, dans l'alignement du tube-guide vertical de l'assemblage combustible dans lequel on introduit le doigt de gant.

Par déplacement des détecteurs de flux à l'intérieur des doigts de gant introduits dans les assemblages, on peut effectuer des mesures de flux suivant toute la hauteur du coeur.

Les doigts de gant doivent pouvoir être extraits des assemblages du coeur, par exemple pour faciliter les opérations de rechargement du coeur du réacteur ou même de l'ensemble des conduits de guidage d'instrumentation correspondants. Pour cela, on exerce une traction sur l'extrémité des doigts de gant, depuis le local de mesure disposé latéralement par rapport au puits de cuve du réacteur.

Lorsque les doigts de gant sont mis en place dans leurs conduits de guidage respectifs et dans le tube-guide des assemblages correspondants, la partie d'extrémité fermée du doigt de gant, généralement constituée par une ogive facilitant le guidage et le déplacement du doigt de gant, est placée à un niveau de référence dans la partie supérieure du tube-guide de l'assemblage.

La position du doigt de gant dans la direction axiale du conduit de guidage est donc fixée une fois pour toutes et les mêmes zones de la paroi du doigt de gant se trouvent toujours placées en vis-à-vis des mêmes zones du conduit de guidage.

Du fait de la circulation de l'eau de refroidissement du réacteur à l'intérieur des conduits de guidage, et dans certaines zones, par exemple avant l'entrée dans le tube-guide de l'assemblage combustible où le doigt de gant est directement exposé à l'eau remplissant la cuve du réacteur, il se produit des vibrations du doigt de gant à l'intérieur du conduit de guidage, du fait que le diamètre intérieur du conduit de guidage est sensiblement supérieur au diamètre externe du doigt de gant pour permettre l'extraction et la mise en place du doigt de gant dans le conduit de guidage.

Dans certaines zones du conduit de guidage et en particulier dans la partie supérieure du canal vertical à l'intérieur des équipements internes, il se produit un frottement générateur d'usure, entre la paroi du doigt de gant et la surface interne du conduit de guidage.

L'usure de la paroi du doigt de gant dans les zones soumises aux frottements peut conduire à une détérioration et même à une rupture du doigt de gant, du fait que l'usure se produit toujours dans les mêmes zones de la paroi du doigt de gant et pendant des périodes de temps très longues correspondant aux durées d'utilisation du réacteur nucléaire.

Dans le cas d'une détérioration du doigt de gant se traduisant par une perte d'étanchéité, du liquide de refroidissement contaminé est susceptible de parvenir dans le local de mesure, par l'intérieur du doigt de gant.

On a proposé des dispositifs de maintien transversal des doigts de gant à l'intérieur de certaines parties du conduit de guidage, permettant de limiter les vibrations, le frottement et l'usure.

Cependant, de tels dispositifs peuvent être difficiles à mettre en place dans le conduit de guidage et peuvent nécessiter l'utilisation de pièces rapportées susceptibles de se détacher par rupture et de devenir des corps migrants dans le circuit primaire du réacteur.

On ne connaissait pas jusqu'ici de procédé permettant de limiter l'usure des doigts de gant sans utiliser de dispositif de maintien transversal.

Le but de l'invention est donc de proposer un procédé d'utilisation d'un conduit de mesure fermé à l'une de ses extrémités ou doigt de gant d'un réacteur nucléaire refroidi par de l'eau sous pression, de manière à allonger la durée de vie en service du doigt de gant assurant le guidage d'une sonde de mesure de flux neutronique jusqu'à l'intérieur d'un assemblage combustible du coeur du réacteur, le doigt de gant étant introduit dans un conduit de guidage constitué par un tube de guidage joignant un local de mesure à la cuve du réacteur nucléaire dans laquelle est placé le coeur, un canal vertical traversant les équipements internes inférieurs du réacteur en-dessous du coeur, dans l'alignement d'un tube-guide vertical de l'assemblage combustible et le tube-guide de l'assemblage, de manière que l'extrémité fermée du doigt de gant pénètre à l'intérieur du tube-guide de l'assemblage combustible, jusqu'à un niveau déterminé, ce procédé permettant d'éviter une usure excessive de la paroi du doigt de gant dans des zones exposées, au cours d'une utilisation de longue durée du réacteur nucléaire.

Dans ce but, on modifie la position du doigt de gant suivant l'axe du conduit de guidage, entre deux périodes successives d'utilisation continue du doigt de gant pour assurer le guidage de la sonde de mesure dans le réacteur nucléaire en fonctionnement, de manière à modifier la position d'au moins une zone d'usure préférentielle de la paroi du doigt de gant, par rapport à au moins une zone du conduit de guidage.

L'invention est également relative à un dispositif de réglage de la position d'un doigt de gant dans la direction axiale d'un conduit de guidage permettant la mise en oeuvre du procédé suivant l'invention.

Afin de bien faire comprendre l'invention, on va maintenant décrire, à titre d'exemple non limitatif, en se référant aux figures jointes en annexe, un exemple de mise en oeuvre du procédé suivant l'invention et les dispositifs de réglage utilisés pour la mise en oeuvre du procédé.

La figure 1 est une vue schématique en élévation et en coupe partielle de la cuve d'un réacteur nucléaire à eau sous pression et de moyens d'instrumentation de cette cuve.

La figure 2 est une vue en élévation et en coupe de la partie d'un conduit de guidage d'un doigt de gant se trouvant à l'intérieur de la cuve d'un réacteur nucléaire.

La figure 3 est une vue en élévation et en coupe verticale d'un tube-guide d'instrumentation d'un assemblage combustible dans lequel est introduit un doigt de gant en position de service.

La figure 4 est une vue en élévation latérale d'une partie des éléments d'un conduit de guidage d'un doigt de gant placés à l'intérieur du local de mesure.

La figure 5 est une vue en coupe à plus grande échelle d'une partie du conduit de guidage représenté sur la figure 4 montrant les moyens de fixation du doigt de gant.

La figure 6 est une vue en perspective éclatée des moyens de fixation du doigt de gant dans le conduit de guidage.

Les figures 7A, 7B et 7C sont des vues en coupe des moyens de fixation du doigt de gant dans le conduit de guidage, dans trois positions différentes suivant la direction axiale.

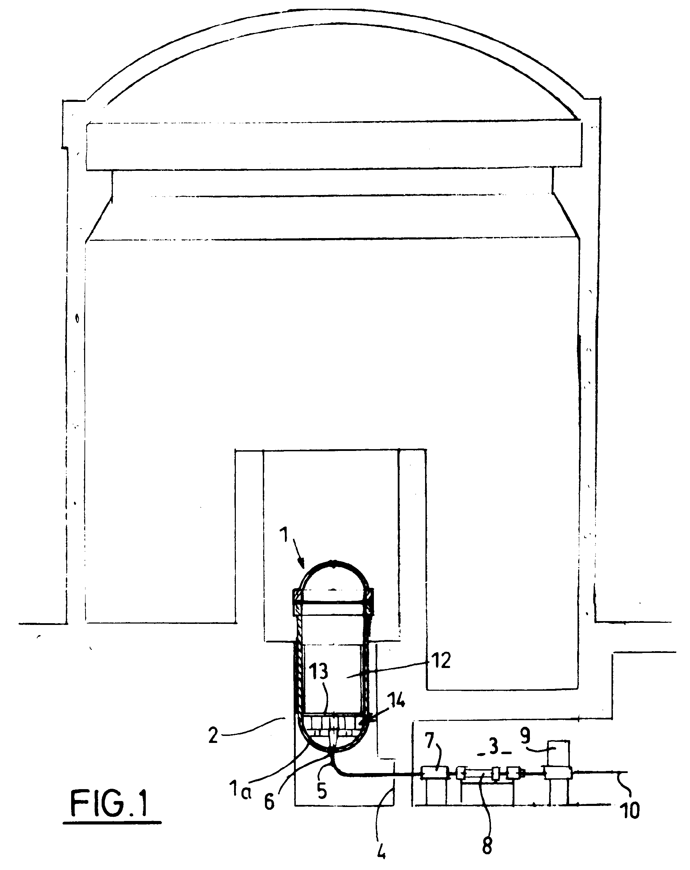

Sur la figure 1, on voit la cuve 1 d'un réacteur nucléaire à eau sous pression disposée à l'intérieur d'un puits de cuve 2 constituant une partie de la structure en béton du réacteur nucléaire.

Un local de mesure 3 entouré par des parois en béton est disposé latéralement par rapport au puits de cuve. L'une des parois latérales 4 du local 3 sépare ce local du puits de cuve 2. Des conduits de guidage d'instrumentation tels que 5 sont reliés à l'une de leurs extrémités à une manchette 6 verticale de traversée du fond de la cuve 1 et comporte en partant de la cuve une partie verticale, une partie coudée et une partie horizontale traversant de manière étanche la paroi 4 du local de mesure 3.

Sur le prolongement horizontal du conduit de guidage 5 à l'intérieur du local 3 sont disposées en particulier une vanne manuelle de sécurité 7, une buselure 8 et une vanne automatique 9.

L'extrémité du doigt de gant 10 placé à l'intérieur du conduit de guidage 5 est accessible à l'extrémité du conduit de guidage 5, à l'intérieur du local 3, de manière qu'il est possible d'introduire et de déplacer dans le doigt de gant 10 une sonde de mesure de flux neutronique fixée à l'extrémité d'un câble téléflex, depuis le local 3.

En outre, il est possible d'effectuer l'extraction partielle et la mise en place des doigts de gant dans les conduits de guidage depuis le local de mesure 3.

La buselure 8 permet d'assurer le passage étanche du doigt de gant auquel est raccordé un prolongateur à la sortie de la buselure 8.

La cuve 1 du réacteur renferme le coeur 12 constitué par des assemblages combustibles de forme prismatique juxtaposés et reposant sur une plaque de support de coeur 13 faisant partie des équipements internes 14 disposés dans la partie inférieure de la cuve 1 fermée par un fond bombé 1a.

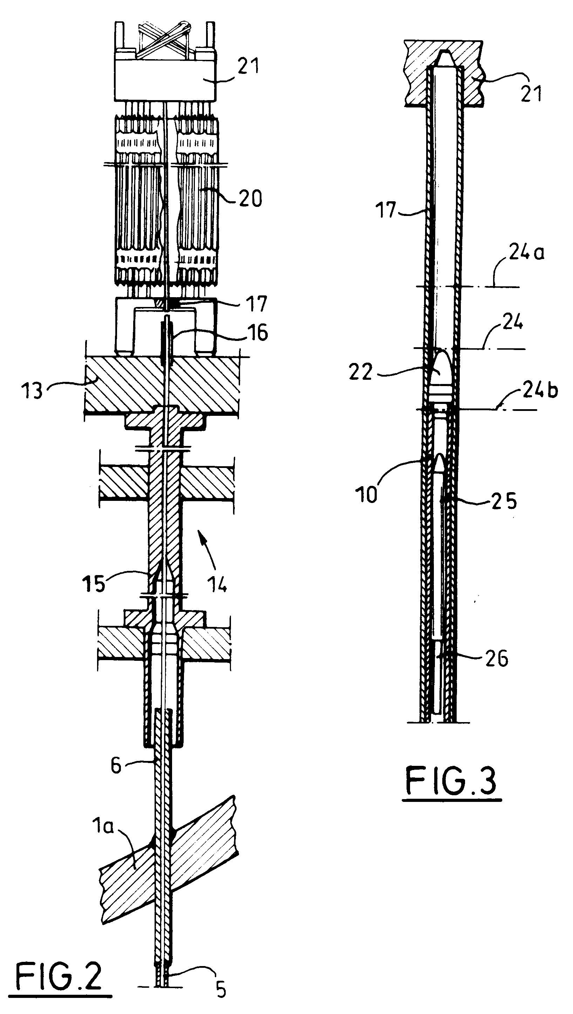

Sur la figure 2, on a représenté une partie de fond de cuve la de forme bombée, au niveau d'une traversée constituée par une manchette 6 fixée par soudage dans un trou de traversée du fond de cuve 1a.

L'extrémité d'un conduit de guidage d'instrumentation 5 est fixée à l'extrémité de la manchette de traversée 6, à l'extérieur du fond 1a.

Les équipements internes 14 de la cuve comportent, dans le prolongement axial de la manchette de traversée 6 de direction verticale, une colonne d'instrumentation 15 dont la partie inférieure ouverte qui présente un diamètre intérieur sensiblement supérieur au diamètre de la manchette 6 est engagée sur l'extrémité supérieure de la manchette avec un jeu radial important.

La partie supérieure de la colonne 15 est fixée sous la plaque de support de coeur 13, au niveau d'une ouverture de traversée de cette plaque de support débouchant sous l'embout inférieur d'un assemblage combustible 20 du coeur du réacteur, par l'intermédiaire d'une buse de guidage 16 débouchant à une faible distance en-dessous de l'extrémité inférieure du tube-guide d'instrumentation 17 de l'assemblage 20.

L'alésage intérieur de la manchette de traversée 6, le passage interne de la colonne d'instrumentation 15, l'ouverture de traversée de la plaque de support de coeur 13 et l'alésage de la buse de guidage 16 présentent un même axe vertical dans le prolongement de l'axe du tube-guide 17 de l'assemblage 20.

Ces éléments constituent la partie du conduit de guidage de l'instrumentation située à l'intérieur de la cuve et à laquelle est relié le tube de guidage 5, au niveau de l'extrémité inférieure de la manchette 6.

On peut ainsi assurer un passage continu du doigt de gant 10 entre le local d'instrumentation 3 et le tube-guide 17 de l'assemblage combustible à l'intérieur de la cuve 1.

Sur la figure 3, on voit la partie supérieure du tube-guide d'instrumentation 17 de l'assemblage 20 fixé sur l'embout supérieur 21 de l'assemblage.

Le doigt de gant 10 qui est fermé à son extrémité par un embout en ogive 22 est introduit à l'intérieur du tube-guide 17 jusqu'au voisinage de sa partie supérieure.

Lorsque le doigt de gant 10 est dans sa position de service à l'intérieur du tube-guide 17, l'extrémité supérieure de l'ogive 22 se trouve à un niveau de référence 24 défini de manière très précise.

La sonde de mesure de flux neutronique 25 fixée à l'extrémité d'un câble téléflex 26 peut être déplacée à l'intérieur du doigt de gant, de manière à pouvoir effectuer des mesures à un niveau quelconque suivant la hauteur de l'assemblage, c'est-à-dire à un niveau quelconque suivant la hauteur du coeur.

Lorsque le réacteur nucléaire est en fonctionnement, de l'eau de refroidissement circule à très grande vitesse à l'intérieur de la cuve, de manière à traverser le coeur dans la direction verticale et de bas en haut.

L'eau de refroidissement qui est envoyée avec une grande vitesse et un grand débit sous la plaque support du coeur pénètre dans les conduits de guidage d'instrumentation et vient en contact avec les doigts de gant.

En outre, il subsiste un espace libre entre la douille de guidage 16 et l'extrémité inférieure du tube-guide d'instrumentation 17, si bien que dans cet espace libre le doigt de gant n'est pas protégé et se trouve soumis au flux d'eau de refroidissement en circulation.

Il en résulte une mise en vibration des doigts de gant tels que 10 à l'intérieur de la partie du conduit de guidage située à l'intérieur de la cuve.

Le doigt de gant est mis en vibration à l'intérieur du conduit de guidage et se trouve en contact frottant avec la partie interne du conduit de guidage, dans certaines zones situées en particulier au voisinage de la plaque de support de coeur.

Du fait que le doigt de gant est toujours placé dans une position identique suivant la direction axiale du conduit de guidage, cette position correspondant à la position de la partie supérieure de l'ogive 22 au niveau de référence 24, le doigt de gant s'use préférentiellement dans certaines zones placées dans des positions parfaitement définies suivant sa longueur.

Cette usure progressive au cours de l'utilisation du doigt de gant peut nécessiter un remplacement du doigt de gant du fait des détériorations entraînées par l'usure.

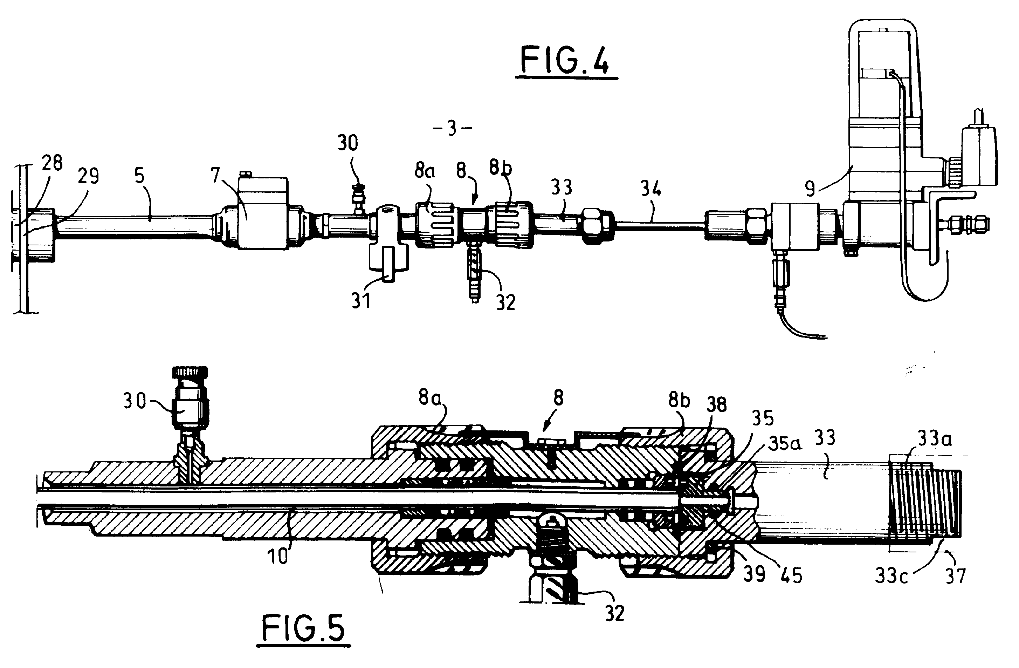

Sur la figure 4, on voit la partie du conduit de guidage d'instrumentation pénétrant à l'intérieur du local de mesure 3.

Le conduit de guidage traverse la paroi 4 du local, de manière étanche, à l'intérieur d'un manchon de traversée 28 fixé à l'intérieur du local sur une tôle de pénétration 29.

Le tube de guidage 5 constituant la partie interne du conduit de guidage est relié à la vanne manuelle 7 assurant l'ouverture et la fermeture du conduit de guidage qui est elle-même reliée à la buselure d'étanchéité 8 par l'intermédiaire d'un élément de conduit sur lequel est disposé un raccord de mise en pression 30. La buselure 8 est fixée par l'intermédiaire d'un support de buselure 31 et comporte un détecteur de fuite 32.

Sur l'extrémité de sortie de la buselure 8 est fixé, comme il sera décrit plus loin, un prolongateur de doigt de gant 33.

Le prolongateur de doigt de gant 33 est relié à la vanne motorisée 9 par l'intermédiaire d'un élément de conduit 34.

L'ensemble représenté sur la figure 4 et situé dans le local de mesure 3 permet d'assurer une sortie étanche du support de sonde introduit dans le doigt de gant, de contrôler l'étanchéité et d'éviter toute sortie de fluide primaire dans le local de mesure.

Comme il est visible sur la figure 5, la buselure 8 qui est un élément bien connu de l'état de la technique comporte des éléments d'étanchéité internes autour du doigt de gant 10 et des bagues de raccord vissées 8a et 8b permettant de relier la buselure 8 à la partie du conduit de guidage reliée à la vanne manuelle 7 en amont et au prolongateur de doigt de gant 33, en aval, respectivement.

A son extrémité de raccordement avec le prolongateur 33, le doigt de gant 10 comporte une pièce de fixation 35 filetée extérieurement et prolongée par un embout lisse 35a à faible diamètre chanfreiné à son extrémité, sur laquelle peut venir se fixer par vissage le prolongateur de doigt de gant 33 qui comporte un alésage interne taraudé permettant le vissage de la pièce 35.

Le prolongateur de doigt de gant 33 comporte également une partie filetée externe 33a permettant le raccordement de la partie terminale du conduit de guidage au prolongateur 33, par l'intermédiaire d'un écrou 37.

La partie filetée 33a du prolongateur 33 comporte deux méplats 33c permettant d'engager une clé de serrage sur le corps du prolongateur.

Pour réaliser l'extraction d'un doigt de gant du conduit de guidage, on désolidarise le prolongateur du conduit en dévissant l'écrou 37, puis le prolongateur 33 de la buselure 8 en dévissant la bague 8b.

On peut alors exercer une traction sur le doigt de gant par l'intermédiaire du prolongateur 33.

La remise en place du doigt de gant peut être effectuée en exerçant une poussée sur le prolongateur 33.

L'étanchéité autour du doigt de gant est assurée, grâce à la buselure 8, qui comporte des joints d'étanchéité constituant des paliers de glissement étanche pour le doigt de gant 10.

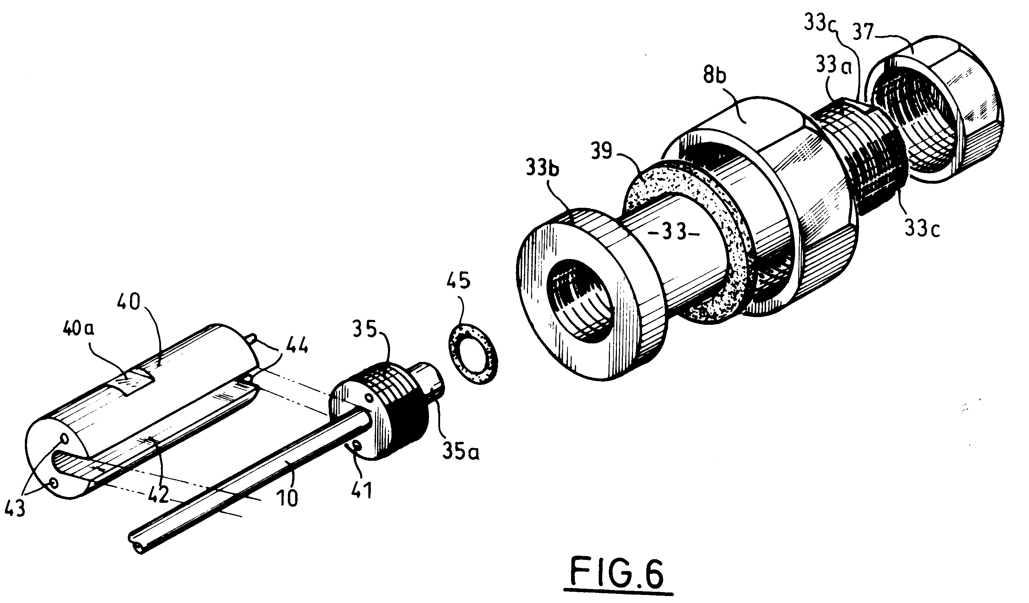

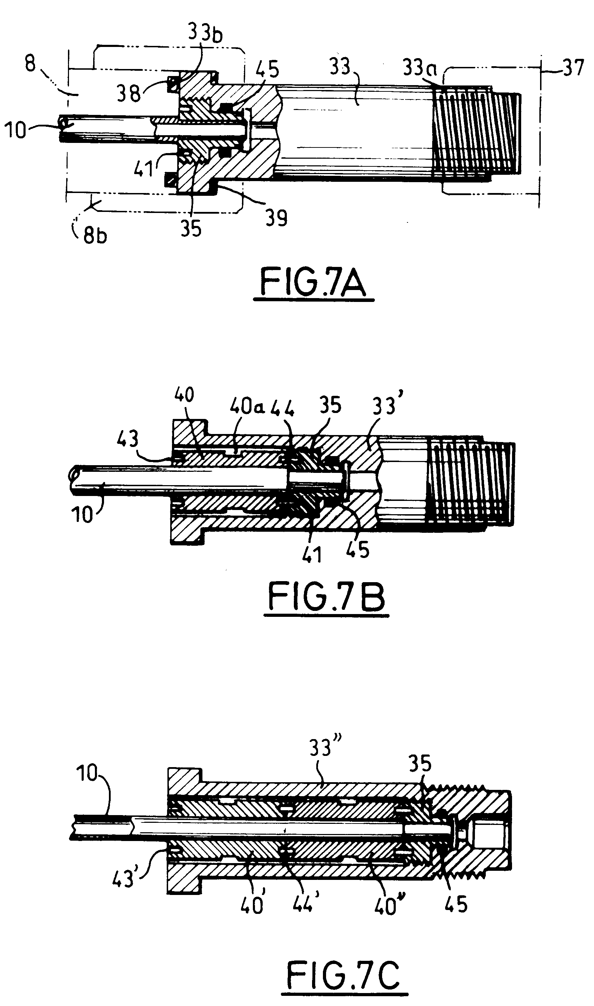

On va maintenant se reporter aux figures 6 et 7A, 7B, 7C pour décrire plus en détail le mode de jonction entre le doigt de gant 10 et le prolongateur 33, par l'intermédiaire de la pièce filetée 35 et les moyens permettant la mise en oeuvre du procédé suivant l'invention par réglage de la position axiale du doigt de gant 10 dans le conduit de guidage.

Le prolongateur 33 comporte un corps cylindrique percé d'un alésage central permettant le passage du support de sonde dans le prolongement du doigt de gant 10 et comportant une partie élargie taraudée assurant la fixation du doigt de gant 10, par l'intermédiaire de la pièce filetée 35, prolongée par une ouverture lisse permettant de recevoir l'embout 35a.

Le prolongateur 33 comporte un épaulement 33b sur lequel vient en appui la bague filetée 8b de raccordement à la buselure 8. Des joints d'étanchéité 38 et 39 sont intercalés entre l'épaulement 33b du prolongateur 33 d'une part et l'écrou 8b et la buselure 8 d'autre part.

La pièce filetée de raccordement 35 est fixée par soudage à l'extrémité du doigt de gant 10 et comporte deux cavités 41 dans lesquelles peuvent venir s'engager deux ergots d'une clé de serrage, lors de la fixation de l'adaptateur ou deux ergots d'une entretoise 40 permettant de réaliser le réglage de la position axiale du doigt de gant 10 dans le conduit de guidage.

Comme il est visible sur les figures 7B et 7C, le réglage de la position axiale du doigt de gant 10 est obtenu par vissage en fond d'alésage de la pièce filetée 35 et en utilisant une ou plusieurs entretoises telles que 40 (figure 7B) ou 40′ et 40˝ (figure 7C).

Pour effectuer le réglage dans la direction axiale du doigt de gant 10 mettant en oeuvre une ou plusieurs entretoises telles que 40, 40′ et 40˝, on utilise des prolongateurs de doigt de gant 33′ et 33˝ comportant un alésage interne à grand diamètre d'une longueur adaptée.

L'entretoise telle que 40 comporte une lumière radiale 42 permettant d'engager le doigt de gant 10 dans l'entretoise 40 jusqu'à sa partie centrale, par simple introduction latérale de l'entretoise et deux méplats tels que 40a pour l'engagement d'une clé de maintien.

L'entretoise telle que 40 comporte également, à l'une de ses extrémités, deux ergots en saillie 44 et à son autre extrémité deux cavités 43 permettant de recevoir deux ergots tels que 44 d'une autre entretoise (dans le cas de l'assemblage de plusieurs entretoises telles que 40′ et 40˝ représentées sur la figure 7C) ou encore les ergots d'une clé à ergots, pour réaliser le serrage du prolongateur sur le doigt de gant.

Le montage du prolongateur 33 sur le doigt de gant 10 peut réaliser la fixation du doigt de gant dans l'une des trois positions axiales correspondant au montage de l'une des figures 7A, 7B ou 7C.

Pour réaliser le montage représenté sur la figure 7A correspondant à une première position du doigt de gant 10 appelée position haute, dans la mesure où l'extrémité du doigt de gant est dans sa position la plus haute à l'intérieur de l'assemblage combustible avec ce premier montage (position 24a sur la figure 3), le prolongateur 33 est simplement vissé sur la pièce de fixation filetée 35, par exemple grâce à une clé en prise avec les méplats 33c. Un joint d'étanchéité torique 45 est engagé sur l'embout lisse 35a et vient se placer dans un logement constitué par une partie élargie diamétralement de l'ouverture lisse de réception du prolongateur 33.

Le serrage peut être effectué en bloquant le doigt de gant en rotation en introduisant une clé à ergots dans les cavités 41 de la pièce 35.

Le prolongateur 33 et le doigt de gant 10 peuvent ensuite être fixés sur la buselure d'étanchéité 8 par l'écrou 8b, comme représenté sur la figure 7A. Le doigt de gant est alors immobilisé à l'intérieur du conduit de guidage dans une position axiale fixe correspondant à sa position haute.

De manière à fixer le doigt de gant à l'intérieur du conduit de guidage dans une position intermédiaire, comme représenté sur la figure 7B, correspondant à la position 24 sur la figure 3, on introduit latéralement une entretoise telle que 40 sur le corps tubulaire du doigt de gant 10, grâce à la lumière 42. L'entretoise 40 est ensuite déplacée axialement le long du doigt de gant 10, de manière que les ergots 44 de l'entretoise viennent s'engager dans les cavités 41 de la pièce de fixation 35.

Un adaptateur ou prolongateur 33′ comportant un alésage interne fileté de grand diamètre dont la longueur axiale correspond à la somme de la longueur axiale de la pièce 35 et de l'entretoise 40 est fixé par vissage sur la pièce de fixation 35.

Le diamètre extérieur de l'entretoise 40 est inférieur au diamètre minimal du filetage de l'alésage à grand diamètre, de sorte que l'entretoise reliée à la pièce 35 par les ergots 44 puisse être introduite à l'intérieur de l'alésage à grand diamètre.

Pour réaliser le vissage de l'adaptateur 33′ sur la pièce de fixation 35 du doigt de gant, celui-ci peut être immobilisé en rotation par une clé comportant des ergots qui sont introduits dans les cavités 43 de l'entretoise 40 ou par une clé engagée sur les méplats 40a.

Lorsque le prolongateur 33′ est fixé sur la buselure 8 par la bague taraudée 8b, l'entretoise 40 se trouve maintenue fermement entre la buse 8 et la pièce de fixation 35.

Il est à remarquer que l'adaptateur 33′ présente une forme externe et des dimensions identiques à celles du prolongateur 33.

De cette manière, la modification et le réglage de la position axiale du doigt de gant 10 sont obtenus sans modifier en aucune sorte les éléments du conduit de guidage relié au prolongateur.

Cependant, pour pouvoir distinguer extérieurement le mode de montage et de positionnement du doigt de gant, on usine sur la surface externe des prolongateurs 33 et 33′ un nombre de rainures correspondant au type du prolongateur et à la position du doigt de gant.

Sur la figure 7C, on a représenté un troisième type de montage du doigt de gant 10 permettant de le placer dans une troisième position axiale appelée position basse correspondant à la position 24b sur la figure 3, dans la mesure où l'extrémité du doigt de gant se trouve alors à l'intérieur de l'assemblage combustible dans une position située à un niveau inférieur au niveau correspondant aux montages des figures 7A et 7B.

Pour réaliser ce montage, on utilise un prolongateur 33˝ comportant un alésage interne fileté à grand diamètre d'une longueur égale à la somme des longueurs axiales de la pièce de fixation 35 et des entretoises 40′ et 40˝ qui sont emboîtées l'une dans l'autre par l'intermédiaire d'ergots d'extrémité 44′ de l'entretoise 40′ engagés dans des cavités de l'entretoise 40˝.

La fixation par vissage du prolongateur 33˝ sur le doigt de gant peut être effectuée en utilisant une clé comportant des ergots qui sont engagés dans les cavités 43′ de l'entretoise 40′ ou une clé de serrage en prise avec les méplats 40a de l'entretoise, pour immobiliser le doigt de gant.

Il est à remarquer que le prolongateur 33˝ présente une forme et des dimensions extérieures identiques à celles du prolongateur 33 et du prolongateur 33′.

Des rainures externes en nombre différent peuvent permettre de distinguer le prolongateur 33˝ des prolongateurs 33 et 33′.

On peut ainsi régler le doigt de gant dans une troisième position ou position basse 24b sans modifier les éléments de montage du prolongateur sur le conduit de guidage.

On peut ainsi modifier très facilement la position axiale d'un doigt de gant à l'intérieur du conduit de guidage, après un certain temps d'utilisation du doigt de gant à l'intérieur du réacteur nucléaire, de manière à modifier la position des zones d'usure suivant la longueur du doigt de gant et donc à allonger la durée de vie du doigt de gant.

Généralement, les doigts de gant des réacteurs nucléaires à eau sous pression sont montés comme représenté sur la figure 7B, de manière que l'extrémité du doigt de gant à l'intérieur du tube-guide de l'assemblage combustible soit à un niveau intermédiaire de référence.

Il est donc possible, en utilisant les moyens tels que représentés sur les figures 6 et 7A à 7C, de modifier deux fois la position du doigt de gant, une première fois en supprimant l'entretoise 40 et en réalisant un montage suivant la figure 7A et une deuxième fois en utilisant deux entretoises telles que 40′ et 40˝ représentées sur la figure 7C.

Le prolongateur correspondant sera usiné intérieurement pour présenter un alésage taraudé à grand diamètre dont la longueur correspond au type de montage.

Le procédé et les dispositifs suivant l'invention permettent donc d'allonger la durée de vie en service d'un doigt de gant dans un conduit de guidage, de manière simple et sans modifier les moyens de raccordement du conduit de guidage.

L'invention ne se limite pas aux modes de réalisation qui ont été décrits.

Il est bien évident qu'on peut déplacer le doigt de gant axialement avec une amplitude variable, en utilisant une ou plusieurs entretoises de longueur adaptée et un prolongateur comportant un alésage interne à grand diamètre dont la longueur correspond à la somme de la longueur axiale de la pièce de raccordement du doigt de gant et de la ou des entretoises.

Il est possible d'envisager seulement deux positions du doigt de gant, soit une position haute et une position basse au lieu de trois positions, comme dans l'exemple décrit.

L'invention s'applique à tout réacteur nucléaire à eau sous pression quelle que soit la disposition du local de mesure par rapport au puits de cuve et quelle que soit la disposition du conduit de guidage dans le local de mesure.

En particulier, le procédé et le dispositif suivant l'invention s'appliquent aussi bien dans le cas d'un conduit de guidage ayant une disposition horizontale dans le local de mesure qu'à un conduit de guidage ayant une partie terminale de direction verticale (conduit d'instrumentation en U).

## Revendications

1. Procédé d'utilisation d'un conduit de mesure (10) fermé à l'une de ses extrémités, appelé doigt de gant, d'un réacteur nucléaire refroidi par de l'eau sous pression, de manière à allonger la durée de vie en service du doigt de gant assurant le guidage d'une sonde (25) de mesure de flux neutronique jusqu'à l'intérieur d'un assemblage combustible (20) du coeur (12) du réacteur, le doigt de gant (10) étant introduit dans un conduit de guidage constitué par un tube de guidage (5) joignant
- un local de mesure (3) à la cuve (1) du réacteur nucléaire dans laquelle est placé le coeur (12),
- un canal vertical traversant les équipements internes inférieurs (14) du réacteur, en-dessous du coeur (12) dans l'alignement d'un tube-guide vertical (17) de l'assemblage combustible (20) et
- le tube-guide (17) de l'assemblage combustible (20),
de manière que l'extrémité fermée (22) du doigt de gant (10) pénètre à l'intérieur du tube-guide (17) de l'assemblage combustible (20), jusqu'à un niveau déterminé, caractérisé par le fait qu'on modifie la position du doigt de gant (10) suivant l'axe du conduit de guidage, entre deux périodes successives d'utilisation du doigt de gant (10) dans le réacteur nucléaire en fonctionnement, de manière à modifier la position d'au moins une zone d'usure préférentielle de la paroi du doigt de gant (10), par rapport à au moins une zone du conduit de guidage.

2. Procédé suivant la revendication 1, caractérisé par le fait qu'on modifie une première fois la position du doigt de gant (10) entre deux périodes d'utilisation successives du doigt de gant (10) dans le réacteur nucléaire en le déplaçant dans un premier sens à l'intérieur du conduit de guidage et qu'on modifie une seconde fois la position du doigt de gant (10) suivant l'axe du conduit de guidage, en le déplaçant dans un sens opposé.

3. Procédé suivant la revendication 2, caractérisé par le fait qu'on modifie la position du doigt de gant (10) suivant l'axe du conduit de guidage entre une première position (24a) correspondant à une position haute de l'extrémité fermée (22) du doigt de gant (10) dans le tube-guide (17) de l'assemblage combustible (20) et une seconde position (24b) correspondant à une position basse de l'extrémité fermée (22) du doigt de gant (10) dans le tube-guide (17) de l'assemblage combustible (20).

4. Procédé suivant l'une quelconque des revendications 1 à 3, dans le cas où le conduit de guidage comporte, à l'intérieur du local de mesure (3), une buselure d'étanchéité (8) dans laquelle le doigt de gant est engagé de manière glissante et étanche et sur laquelle le doigt de gant (10) est fixé par l'intermédiaire d'un prolongateur (33, 33′, 33˝) comportant un alésage interne taraudé dans lequel est vissée une pièce de fixation filetée (35) solidaire de l'extrémité du doigt de gant (10), caractérisé par le fait que, pour modifier la position axiale du doigt de gant (10) dans le conduit de guidage, on démonte la liaison entre le prolongateur (33, 33′, 33˝) et la buselure (8), on sépare par dévissage le prolongateur (33, 33′, 33˝) du doigt de gant (10), on fixe par vissage sur la pièce de fixation filetée (35) du doigt de gant (10) un nouveau prolongateur (33, 33′, 33˝) comportant un alésage interne taraudé d'une longueur différente de la longueur de l'alésage du premier prolongateur, et on introduit autour du doigt de gant (10), au moins une entretoise à l'intérieur de l'alésage du prolongateur (33) dans le cas où la longueur de la partie de l'alésage à grand diamètre du prolongateur (33, 33′, 33˝) est supérieure à la longueur axiale de la pièce de fixation (35) du doigt de gant (10), l'entretoise étant intercalée entre la pièce de fixation (35) et un épaulement (33b) du prolongateur (33, 33′, 33˝) destiné à venir en contact avec l'extrémité de la buselure (8).

5. Dispositif de réglage de la position axiale d'un doigt de gant (10) à l'intérieur d'un conduit de guidage d'instrumentation d'un réacteur nucléaire à eau sous pression comportant, dans un local de mesure (3) une buselure d'étanchéité (8) de forme tubulaire permettant le passage glissant et étanche du doigt de gant (10) et des moyens de fixation (8b) du doigt de gant (10) dans le conduit de guidage, par l'intermédiaire d'un prolongateur (33) comportant un alésage central ayant une partie filetée à grand diamètre du côté d'un épaulement (33b) du prolongateur (33) destiné à venir en appui contre la buselure (8) contre laquelle l'épaulement (33b) est maintenu par une bague vissée (8b), caractérisé par le fait qu'il est constitué par le prolongateur (33, 33′, 33˝) dont la partie taraudée à grand diamètre de l'alésage interne ayant une extrémité dans le plan de l'épaulement (33b) présente une longueur variable permettant de modifier la position axiale du doigt de gant (10), comportant une pièce de fixation filetée (35), qui est vissée jusqu'au fond de l'alésage taraudé à grand diamètre du prolongateur (33, 33′, 33˝).

6. Dispositif de réglage suivant la revendication 5, caractérisé par le fait qu'il comporte de plus au moins une entretoise (40, 40′, 40˝) de forme cylindrique ayant un diamètre inférieur au diamètre de l'alésage du prolongateur (33, 33′, 33˝) dans sa partie taraudée à grand diamètre et présentant sur toute sa longueur dans la direction axiale, une lumière (42) de direction radiale, jusqu'à la partie centrale de l'entretoise dont la largeur est supérieure au diamètre du doigt de gant (10).

7. Dispositif de réglage suivant la revendication 6, caractérisé par le fait que l'entretoise (40, 40′, 40˝) comporte à l'une de ses extrémités axiales au moins deux cavités (43) et à son extrémité axiale opposée au moins deux ergots (44) en saillie dans la direction axiale, de manière à solidariser en rotation deux entretoises successives (40′, 40˝) à l'intérieur de l'alésage à grand diamètre du prolongateur (33˝) par engagement d'ergots (44′) d'une entretoise (40′) dans les cavités d'une seconde entretoise (40˝).

8. Dispositif suivant l'une quelconque des revendications 5 à 7, caractérisé par le fait que la pièce de fixation filetée (35) du doigt de gant (10) comporte au moins deux cavités (41) pour l'engagement d'ergots d'une clé à ergots lors de la fixation par vissage du prolongateur ou pour l'engagement d'ergots (44) d'une entretoise (40, 40˝).

## Patentansprüche

1. Verfahren zum Verwenden einer an einem ihrer Enden geschlossenen Meßleitung (10), genannt Tülle (doigt de gant), eines mit Druckwasser gekühlten Kernreaktors, derart, daß die Lebensdauer unter Verwendung der Tülle verlängert wird, wobei die Führung einer Meßsonde (25) des Neutronenflusses bis zum Inneren einer Kernbrennelementanordnung (20) des Kerns (12) des Reaktors sichergestellt wird, wobei die Tülle (10) in eine Führungsleitung eingeführt ist, die von einem Führungsrohr (5) gebildet wird, welches
- einen Meßort oder Meßraum (3) mit dem Becken (1) des Kernreaktors, in dem sich der Kern (12) befindet,
- einen vertikalen Kanal, der die unteren inneren Ausrüstungen (14) des Reaktors durchquert, unterhalb des Kerns (12) in der Ausrichtung mit einer vertikalen Rohrführung (17) der Brennelementanordnung (20), und
- die Rohrführung (17) der Brennelementanordnung (20),
verbindet, derart, daß das geschlosse Ende (20) der Tülle (10) in das Innere der Rohrführung (17) der Brennelementanordnung (20) bis zu einem vorbestimmten Niveau eindringt, dadurch gekennzeichnet, daß die Position der Tülle (10) entlang der Achse der Führungsleitung zwischen zwei aufeinanderfolgenden Verwendungszeiträumen der Tülle (10) in den im Betrieb befindlichen Kernreaktor derart verändert wird, daß die Position wenigstens einer bevorzugten Abnutzungszone der Seitenwand der Tülle (10) bezüglich wenigstens einer Zone der Führungsleitung verändert wird.

2. Verfahren nach Anspruch 1, dadurch gekennzeichnet, daß ein erstes Mal die Position der Tülle (10) zwischen zwei aufeinanderfolgenden Verwendungszeiträumen der Tülle (10) in dem Kernreaktor verändert wird, indem sie in eine erste Richtung im Inneren der Führungsleitung verschoben wird, und daß ein zweites Mal die Position der Tülle (10) entlang der Achse der Führungsleitung verändert wird, indem sie in entgegengesetzte Richtung verschoben wird.

3. Verfahren nach Anspruch 2, dadurch gekennzeichnet, daß die Position der Tülle (10) entlang Achse der Führungsleitung zwischen einer ersten Position (24a), die einer oberen Position des geschlossenen Endes (22) der Tülle (10) in der Rohrführung (17) der Brennelementanordnung (20) entspricht, und einer zweiten Position (24b) verändert wird, die einer unteren Position des geschlossenen Endes (2) der Tülle (10) in der Rohrführung (17) der Brennelementanordnung (20) entspricht.

4. Verfahren nach einem der Ansprüche 1 bis 3, in dem Fall, wo die Führungsleitung im Inneren des Meßortes (3) einen Tüllen-Dichtungsüberzug (8) aufweist, in den die Tülle auf gleitende und dichte Weise eingreift, und an dem die Tülle (10) mittels einer Verlängerung (33, 33′, 33˝) befestigt ist, die eine innere Gewindeausnehmung aufweist, in die ein Gewindebefestigungsteil (35) eingeschraubt ist, das mit dem Ende der Tülle (10) verbunden ist, dadurch gekennzeichnet, daß zur Veränderung der axialen Position der Tülle (10) in der Führungsleitung, die Verbindung zwischen der Verlängerung (33, 33′, 33˝) und dem Tüllen-Dichtungsüberzug (8) entfernt wird, daß durch Losschrauben die Verlängerung (33, 33′, 33˝) von der Tülle (10) getrennt wird, daß durch Schrauben auf das Gewindebefestigungsteil (35) der Tülle (10) eine neue Verlängerung (33, 33′, 33˝) befestigt wird, die eine innere Gewindeausnehmung aufweist, die eine unterschiedliche Länge zur Länge der Ausnehmung der ersten Verlängerung aufweist, und um die Tülle (10) wenigstens eine Abstandshülse oder -stück im Inneren der Ausnehmung der Verlängerung (33) eingeführt wird, in dem Fall, wo die Länge des Bereichs der Ausnehmung mit großem Durchmesser der Verlängerung (33, 33′, 33˝) größer ist als die axiale Länge des Befestigungsteils (35) der Tülle (10), wobei die Abstandshülse zwischen dem Befestigungsteil (35) und einer Schulter (33b) der Verlängerung (33, 33′, 33˝) eingeklemmt wird, die dazu dient, in Kontakt mit dem Ende des Tüllen-Dichtungs-überzugs (8) zu kommen.

5. Vorrichtung zum Einstellen der axialen Position einer Tülle (10) (doigt de gant) im Inneren einer Führungsinstrumentierungsleitung eines Druckwasserkernreaktors, in einem Meßort (3), mit einem Tüllen-Dichtungsüberzugs (8) von rohrförmiger Ausbildung, der das gleitende und dichte Bewegen der Tülle (10) ermöglicht, und mit Befestigungseinrichtungen (8b) der Tülle (10) in der Führungsleitung, mittels einer Verlängerung (33), die eine zentrale Ausnehmung aufweist, die einen Gewindeabschnitt mit großem Durchmesser auf der Seite einer Schulter (33b) der Verlängerung (33) aufweist, die dazu dient, in Anlage gegen den Dichtungsüberzug (8) zu kommen, gegen den die Schulter (33b) durch einen aufgeschraubten Ring (8b) gehalten wird, dadurch gekennzeichnet, daß sie von der Verlängerung (33, 33′, 33˝) gebildet wird, deren Gewindeabschnitt mit großem Druchmesser der Innenausnehmung, die ein Ende in der Ebene der Schulter (33b) hat, eine variable Länge aufweist, die ermöglicht, die axiale Position der Tülle (10) zu verändern, die ein Gewindebefestigungsteil (35) aufweist, das bis zum Boden der Gewindeausnehmung mit großem Durchmesser der Verlängerung (33, 33′, 33˝) geschraubt ist.

6. Einstellvorrichtung nach Anspruch 5, dadurch gekennzeichnet, daß sie weiterhin wenigstens eine Abstandshülse (40, 40′, 40˝) von zylindrischer Form aufweist, die einen Durchmesser aufweist, der geringer ist als der Durchmesser der Ausnehmung der Verlängerung (33, 33′, 33˝) in ihrem Gewindebereich mit großem Durchmesser, und über die gesamte Länge in der axialen Richtung eine Öffnung (42) von radialer Richtung aufweist, bis zu einem zentralen Bereich der Abstandshülse, deren Breite größer ist als der Durchmesser der Tülle (10).

7. Einstellvorrichtung nach Anspruch 6, dadurch gekennzeichnet, daß die Abstandshülse (40, 40′, 40˝) an einem ihrer axialen Enden wenigstens zwei Vertiefungen (43) und an ihrem entgegengesetzten axialen Ende wenigstens zwei Zapfen (44) aufweist, die in Axialrichtung vorspringen, derart, daß zwei aufeinanderfolgende Abstandshülsen (40′, 40˝) im Inneren der Ausnehmung mit großem Durchmesser der Verlängerung (33˝) durch Eingriff von Zapfen (44′) einer Abstandshülse (40′) in die Vertiefungen einer zweiten Abstandshülse (40˝) drehverbunden werden.

8. Vorrichtung nach einem der Ansprüche 5 bis 7, dadurch gekennzeichnet, daß das Gewindebefestigungsteil (35) der Tülle (10) wenigstens zwei Vertiefungen (41) für den Eingriff von Zapfen eines Schlüssels mit Zapfen bei der Befestigung durch Schrauben der Verlängerung oder für den Eingriff von Zapfen (44) einer Abstandshülse (40, 40˝) aufweist.

## Claims

1. Method of operating a measurement tube (10) closed at one of its ends, referred to as a thimble tube, of a nuclear reactor cooled by pressure water in order to prolong the service life of the thimble tube assuring the guidance of a probe (25) for measuring the neutron flux as far as the interior of a fuel assembly (20) of the reactor core (12), wherein the thimble tube (10) is inserted into a guide channel comprising a guide tube (5) connecting a measurement area (3) to the vessel (1) of the nuclear reactor in which the core (12) is located, a vertical channel passing through the lower internal installations (14) of the reactor below the core (12) flush with a vertical guide tube (17) of the fuel assembly (20) and the guide tube (17) of the fuel assembly (20) so that the closed end (22) of the thimble tube (10) passes into the interior of the guide tube (17) of the fuel assembly (20) to a determined level, characterised in that the position of the thimble tube (10) is modified along the axis of the guide channel between two successive periods of use of the thimble tube (10) in the nuclear reactor in operation in order to modify the position of at least one preferred wear zone of the wall of the thimble tube (10) in relation to at least one zone of the guide channel.

2. Method according to Claim 1, characterised in that the position of the thimble tube (10) is modified firstly between two successive periods of use of the thimble tube (10) in the nuclear reactor by displacing it in a first direction inside the guide channel; and that the position of the thimble tube (10) is modified secondly along the axis of the guide channel by displacing it in an opposing direction.

3. Method according to Claim 2, characterised in that the position of the thimble tube (10) is modified along the axis of the guide channel between a first position (24a) wherein the closed end (22) of the thimble tube (10) is in a high position in the guide tube (17) of the fuel assembly (20), and a second position (24b) wherein the closed end (22) of the thimble tube (10) is in a low position in the guide tube (17) of the fuel assembly (20).

4. Method according to any one of Claims 1 to 3 wherein inside the measurement area (3), the guide channel comprises a sealing bush (8), in which the thimble tube is engaged to allow sliding movement and to provide a seal, and on which the thimble tube (10) is attached via an extension means (33, 33′, 33˝) comprising a threaded internal hole, into which a threaded connection piece (35) integral to the end of the thimble tube (10) is screwed, characterised in that in order to modify the axial position of the thimble tube (10) in the guide channel, the connection between the extension means (33, 33′, 33˝) and the bush (8) is disengaged, the extension means (33, 33′, 33˝) is unscrewed from the thimble tube (10) and a new extension means (33, 33′, 33˝) comprising a threaded inside hole of a different length to the length of the hole of the first extension means is screwed onto the threaded connection piece (35) of the thimble tube (10), and at least one spacer is placed around the thimble tube (10) inside the hole of the extension piece (33) if the length of the section of the hole in the extension means (33, 33′, 33˝) with a large diameter is greater than the axial length of the connection piece (35) of the thimble tube (10), the spacer being interposed between the connection piece (35) and a shoulder (33b) of the extension means (33, 33′, 33˝) which will come into contact with the end of the bush (8).

5. Device for varying the axial position of the thimble tube (10) inside a guide channel of the installations of a pressure water nuclear reactor, comprising in a measurement area (3), a tubular sealing bush (8) permitting the thimble tube (10) to slide through it to form a seal, and means (8b) for fastening the thimble tube (10) in the guide channel via an extension means (33) comprising a central hole with a large-diameter threaded portion on the side of a shoulder (33b) of the extension means (33) to come into abutment against the bush (8), against which the shoulder (33b) is held by a threaded ring (8b), characterised in that it consists of the extension means (33, 33′, 33˝), in which the large-diameter threaded portion of the inside hole with an end in the plane of the shoulder (33b) has a variable length enabling modification of the axial position of the thimble tube (10) comprising a threaded connection piece (35) which is screwed to the bottom of the large-diameter threaded hole in the extension means (33, 33′, 33˝).

6. Device according to Claim 5, characterised in that it consists essentially of a cylindrical spacer (40, 40′, 40˝) with a smaller diameter than the diameter of the hole in the extension means (33, 33′, 33˝) in its large-diameter threaded portion and has a radially directed slot (42) extending axially over its entire length up to the central portion of the spacer, the width of which is greater than the diameter of the thimble tube (10).

7. Device according to Claim 6, characterised in that the spacer (40, 40′, 40˝) has at least two cavities (43) on one of its axial ends and has at least two lugs (44) on its opposite axial end which project in axial direction in order to jointly rotate two successive spacers (40′, 40˝) on the inside of the large-diameter hole in the extension piece (33˝) by engaging lugs (44) of one spacer (40′) in the cavities of a second spacer (40˝).

8. Device according to any one of Claims 5 to 7, characterised in that the threaded connection piece (35) of the thimble tube (10) has at least two cavities (41) for engagement of the lugs of a hook wrench when connecting the extension means by means of screws or for engagement of lugs (44) of a spacer (40, 40˝).
